# EUROPEAN PATENT APPLICATION

(11) **EP 0 993 128 A1**
(43) Date of publication of application: **12.04.2000**
(21) Application number: 98402436.4
(22) Date of filing: 05.10.1998
(51) Int. Cl.: H04B 7/005

(54) **Power control in communications systems**

(71) Applicant: MOTOROLA, INC., Schaumburg, IL 60196 (US)
(72) Inventor: Martinez, Georges, 1400 Caen (FR); Vivier, Guillaume, 75013 Paris (FR)
(74) Representative: Joly, Jean-Jacques

(57) **Abstract**

In a code division multiple access communications system, a common power control physical channel (CPCCH) and its structure is proposed for enabling the use of fast power control for a communications uplink (3) when dedicated downlink (4) physical channels are not available because of traffic conditions or code shortage.

## Description

This invention relates to communications systems and particularly though not exclusively to power control for mobile cellular communications systems employing code division multiple access (CDMA) techniques.

In a cellular communications system, a plurality of base stations provide a radio telecommunications services to a plurality of mobile subscriber units. Each base station defines a particular geographical area or cell proximate to the base station to produce coverage areas. The communications link from the base station to a mobile subscriber unit is referred as to the downlink. Conversely, the communications link from a mobile subscriber unit to the base station is referred to as the uplink.

Multiple access techniques permit the simultaneous transmissions from several mobile subscriber units to a single base station over a plurality of communications channels. Some channels are used for carrying traffic and other control channels are used for transferring control information, such as call paging, between the base station and the subscriber units.

Some examples of multiple access techniques are frequency division multiple access (FDMA), time division multiple access (TDMA) and code division multiple access (CDMA).

An example of a TDMA system is the global system for mobile communications (GSM) in which a time frame is divided into eight different time slots. Each subscriber unit is allocated one specific time slot for communication to the base station in this repeating time frame.

A CDMA system employs spread spectrum signaling. Two categories of spread spectrum communications are direct sequence spread spectrum (DSSS) and frequency hopping spread spectrum (FHSS). In the case of DSSS for example, the spectrum of a signal can be most easily spread by multiplying it with a wide-band pseudo-random code generated signal. It is essential that the spreading signal be precisely known so that the receiver can de-spread the signal. A cellular communications system using DSSS is commonly known as a direct sequence code division multiple access (DS-CDMA) system, according to the TIA-EAI standard IS-95. Individual users in the system use the RF frequency but are separated by the use of individual spreading codes. Hence, multiple communications channel are allocated using a plurality of spreading codes within a portion of the radio spectrum, each code being uniquely assigned to a mobile subscriber unit, except for common channels.

One proposal for the next generation of mobile multi-media communication systems (known as UMTS -Universal Mobile Telecommunications System) employs a FDD-CDMA system (Frequency Division Duplex CDMA). In the FDD method, the uplink and the downlink use different carrier frequencies.

One feature of the current GSM system and which is also envisaged for UMTS, allows the transceivers in the base station and subscriber unit to adjust their power output to take into account the distance between them. The closer the subscriber unit is to the base station's transceiver, the less power it and the base station's transceiver will be required to transmit. This feature saves battery power in the subscriber unit and also helps to reduce interference effects. Both uplink and downlink power settings can be controlled independently. Initial power settings for the subscriber unit along with other control information, is set by the information provided on a broadcast control channel (BCCH) for a particular cell. The base station controls the transmit power of both the subscriber unit and the base station's transceiver. The received subscriber unit's power is monitored by the base station and the power received from the base station's transceiver at the subscriber unit is monitored by the subscriber unit and then reported to the base station. Using these measurements the power of both the subscriber unit and the base station's transceiver can be adjusted accordingly. The broadcast control channel is transmitted by the base station's transceiver at all times and at constant power. In addition to a power control indicator, the BCCH also carries other information such as cell identity, a list of frequencies used in the cell, and a list of neighbouring cells to be monitored by the subscriber unit.

The UMTS FDD interface is based on wideband-CDMA. As such, it is sensitive to power control mismatches in the uplink because of the channel fast fading (fast fading is caused by the signal arriving at a receiver via a number of different paths). Therefore, in order to achieve maximum uplink capacity in a CDMA system, a fast power control loop (with the power control commands being available on the downlink) is required.

UMTS has to support assymetrical traffic conditions because of the nature of multi-media traffic. The drawback is that both uplinks and downlinks may not be available simultaneously so there may be traffic conditions for which downlink power control commands will not be available unless a dedicated physical control channel (DPCCH) is maintained.

Preferably, a UMTS system will be able to support packet data services. Such services are characterised by bursty traffic conditions on both links. Again, a fast closed power control loop can only be achieved if a DPCCH is available.

One solution is to use a shared channel to transmit both data and power control bits. However, this is not a flexible solution in terms of assignment policy as power controlled users are only those who are receiving data from the shared channel.

Finally, it is anticipated that UMTS traffic conditions and air interface downlink capacity may lead to spreading codes shortage. Maintaining the DPCCH for the first power control loops is likely to exacerbate this problem.

The present invention seeks to provide a solution to the aforementioned problems.

According to the present invention a communications system includes a base station, a plurality of subscriber units, a downlink for communication from the base station to the subscriber units, and an uplink for communication from the subscriber units to the base station, wherein a control channel is provided on the downlink and characterised in that said control channel is a common control channel dedicated to power control.

Hence, in order to provide power control bits to users that do not have significant downlink traffic to implement a fast power loop control, a downlink channel is designed, such that it can be shared by several users. It is therefore, a downlink common control channel dedicated to power control.

The invention has the following advantages;
1. Common traffic channels and control channels can have their capacity increased if they are re-tailored, removing the power control field.
2. Users can independently be assigned to the common traffic channels and the dedicated power control channel, thereby not linking the users to be power controlled to the existence of downlink traffic.
3. A DPCCH is not required, threfore saving downlink spreading codes and capacity (or power).
4. The invention assists in solving potential spreading code shortage for the downlink.

The control channel in accordance with the invention can be designed for any CDMA system. As an example, it will be described herein for the wideband CDMA air interface currently being discussed within ETSI (European Telecommunications Standards Institute), with reference to the drawings of which;
Figure 1 is a schematic diagram of a mobile cellular communications system;
Figure 2 shows a time slot arrangement of a downlink frame in the ETSI WB-CDMA system; and
Figure 3 shows a time slot arrangement of a common power control channel in accordance with the invention.

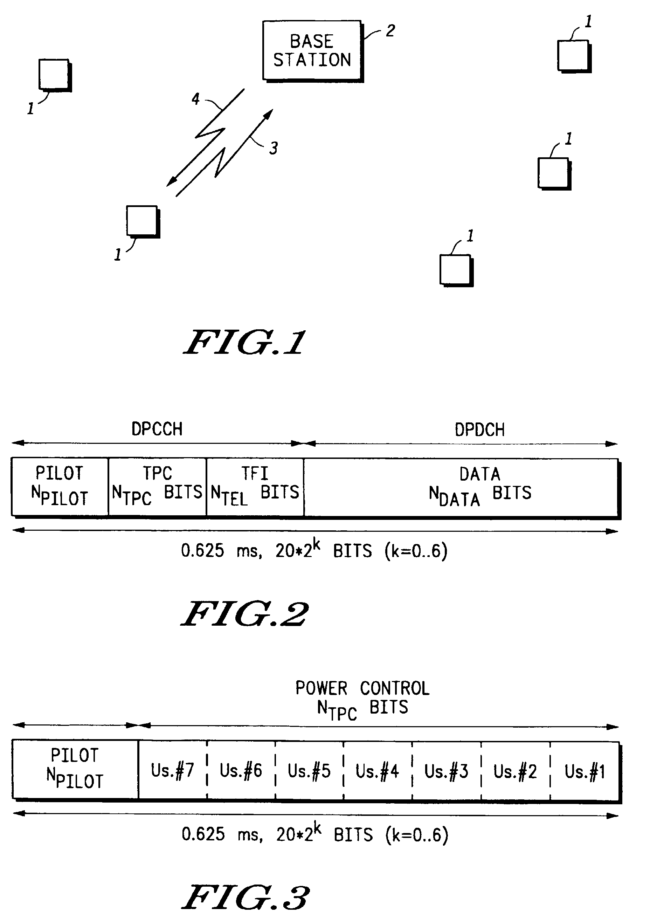

In Figure 1 a plurality of subscriber units 1 communicate with a base station 2 via an uplink 3 and a downlink 4. Both uplink and downlink comprise a plurality of traffic and control channels.

In the ETSI WB-CDMA system the downlink frame is divided into 16 slots, each one lasting one power control period (see Figure 2).

In accordance with the invention, The dedicated physical channel (DPCH) slot structure is modified in such away that the data part is replaced by power control bits as shown in Figure 3. It defines the elementary slot for the common power control channel (CPCCH).

One power control command is on two bits. The number of users that can be power controlled with such a channel is then 7 x 2^{k} and the power control rate is 1600 Hz for the WB-CDMA case, with 2^{8-K} being the spreading factor.

If the power control rate can be lower (in the case of better channel conditions) then pilot bits can be stolen and used to indicate sets of users to be controlled by the received slot. This further increases the CPCCH capacity. If further capacity is required on this channel additional codes can be dedicated to this channel or a lower spreading factor can be used.

Users assigned to use the CPCCH can be notified by the communications system through any downlink channel (common or dedicated), with an Open Systems Interconnection layer 2 or layer 3 signaling message. Such a signaling message could be structured as follows.
Set; (1 bit) indicates the set where the power control command will be available. Offset; (3 bit) indicates the power field control position from the end of the slot.
Code; (two-bit) indicates the pre-defined code where to find the power control commands.

It can be decided from the protocol point of view that the action will start on the next frame following the reception of the assignment message. Then, the downlink data bearer is suppressed until a new request is made by the subscriber unit.

For the above example, where the spreading factor is 256, up to 4 codes can be assigned to CPCCH channels and one bit is stolen from the pilot bits to indicate which set out of two a specific user is assigned to.

The previous message is on six bits (excluding the header) and is able to address up to 56 users with 4 codes with a spreading factor of 256, without requiring a specific dedicated physical control channel in contrast with the current air interface proposal.

## Claims

1. A communications system including a base station (2), a plurality of subscriber units (1), a downlink (4) for communication from the base station to the subscriber units and an uplink (3) for communication from the subscriber units (1) to the base station (2) wherein a control channel is provided on the downlink (4) and characterised in that said control channel (4) is a common control channel dedicated to power control (CPCCH).

2. A communications system as claimed in Claim 1 in which the downlink (4) is further provided with a channel for notifying assigned subscriber units (1) by means of a signaling message, that they are assigned to use the CPCCH.
